# EUROPÄISCHE PATENTANMELDUNG

(11) **EP 4 664 350 A1**
(43) Veröffentlichungstag der Anmeldung: **17.12.2025**
(21) Anmeldenummer: 25182016.3
(22) Anmeldetag: 11.06.2025
(51) Int. Cl.: G06F 40/56

(54) **VERFAHREN UND VORRICHTUNG ZUM GENERIEREN EINER GEWICHTETEN TEXTAUSGABE UND/ODER SPRACHAUSGABE AUF BASIS VON EINGABEDATEN**

(30) Priorität: 13.06.2024 DE 102024116652
(71) Anmelder: FORBENCAP GmbH, 87527 Sonthofen (DE)
(72) Erfinder: Götz, Stefan, 85659 FORSTEN (DE)
(74) Vertreter: advotec.

(57) **Zusammenfassung**

Die Erfindung beschreibt Verfahren zum automatischen Generieren einer gewichteten Textausgabe und/oder Sprachausgabe auf Basis von Eingabedaten; das Verfahren aufweisend:
- Bereitstellen (S1) von Eingabedaten, die Kennzeichnungsinformationen zu Objekten, die in den Eingabedaten umfasst sind, aufweisen;
- Bereitstellen (S2) einer Gewichtungsinformation zu mindestens einem der Objekte und/oder zu mindestens einer der Kennzeichnungsinformationen; und
- Verarbeiten (S3) der Eingabedaten und/oder der Objekte und/oder der Kennzeichnungsinformationen und der Gewichtungsinformation durch mindestens ein maschinelles Lernmodell zum Generieren der auf Basis der Gewichtungsinformation gewichteten Textausgabe und/oder Sprachausgabe.

## Beschreibung

Die Erfindung betrifft ein Verfahren und eine Vorrichtung zum automatischen Generieren einer gewichteten Textausgabe und/oder Sprachausgabe auf Basis von Eingabedaten.

### Stand der Technik

Die Automatisierung bei der Erstellung von Textdokumenten hat durch die zunehmende Entwicklung großer Sprachmodelle, wie beispielsweise die verschiedenen Generationen von Generative Pre-Trained Transformers (GPT), an Bedeutung gewonnen. Diese fortschrittlichen Technologien ermöglichen es, einfache und teils unstrukturierte Informationen in verständliche und nachvollziehbare Texte zu transformieren. Der Einsatz von Large Language Models (LLMs) hat dabei eine zentrale Rolle eingenommen. Diese Modelle arbeiten auf Basis komplexer statistischer Methoden und nutzen Wahrscheinlichkeiten, um auf Grundlage der vorherigen Worte das nächste Wort vorherzusagen. Dadurch entstehen teils kohärente und sinnvolle Textpassagen, die eine Vielzahl von Anwendungen ermöglichen.

Eine bemerkenswerte Innovation in diesem Bereich ist die Fähigkeit der neuesten GPT-Generation oder auch anderen Kombinationen von Convolutional Neural Networks mit Transformern sowie Encoder- und insbesondere Decoder-Strukuren, Texte basierend auf Bildeingaben zu generieren. Diese Funktion erweitert die Möglichkeiten der Textautomatisierung erheblich, indem sie es ermöglicht, visuelle Informationen in abstrakte Beschreibungen zu übersetzen. Methoden wie Segmentierung und Klassifizierung sind hierbei entscheidend, um relevante Texteinbettungen zu erstellen, die dann durch LLMs zu einem zusammenhängenden und teils sinnvollen Text führen. Dies stellt einen Fortschritt in der Verarbeitung und Interpretation von visuellen Daten dar und eröffnet neue Anwendungsfelder in Bereichen wie Bildbeschreibung und -analyse.

Trotz dieser beeindruckenden Fortschritte bleiben jedoch Herausforderungen bestehen. Insbesondere die Fähigkeit, Texte zu generieren, die einen tieferen Sinnzusammenhang aufweisen und über reine semantische Verknüpfungen hinausgehen, ist noch nicht vollständig ausgereift. Während LLMs in der Lage sind, grammatisch korrekte und kontextuell passende Sätze zu erstellen, fehlen ihnen oft die tiefergehende logische Konsistenz und das Verständnis für komplexe Zusammenhänge. Diese Lücken sind besonders deutlich, wenn es darum geht, längere und inhaltlich anspruchsvolle Texte zu verfassen, die über die einfache Aneinanderreihung von Informationen hinausgehen.

Die Weiterentwicklung und Verfeinerung dieser Modelle erfordert daher nicht nur eine Verbesserung der zugrunde liegenden Algorithmen, sondern auch eine tiefere Integration von Wissen und Kontext.

Es ist eine Aufgabe der Erfindung, ein dahingehend verbessertes Verfahren und/oder eine dahingehend verbesserte Vorrichtung anzugeben.

### Offenbarung der Erfindung

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 14.

Gemäß einem ersten Aspekt wird ein Verfahren zum automatischen Generieren einer gewichteten Textausgabe und/oder Sprachausgabe auf Basis von Eingabedaten vorgeschlagen. Das Verfahren aufweisend:
- Bereitstellen von, insbesondere graphischen, Eingabedaten, die Kennzeichnungsinformationen zu Objekten, die in den Eingabedaten umfasst sind, aufweisen; wobei die Kennzeichnungsinformationen eine jeweilige Objektbeschreibung- und/oder Klassifizierung und/oder eine Interaktionsinformation zwischen Objekten aufweist;
- Bereitstellen einer Gewichtungsinformation zu mindestens einem der Objekte und/oder zu mindestens einer der Kennzeichnungsinformationen; und
- Verarbeiten der Eingabedaten und/oder der Objekte und/oder der Kennzeichnungsinformationen und der Gewichtungsinformation durch mindestens ein maschinelles Lernmodell zum Generieren der auf Basis der Gewichtungsinformation gewichteten Textausgabe und/oder Sprachausgabe. Das Verfahren weist vorzugsweise ein Generieren der auf Basis der Gewichtungsinformation gewichteten Textausgabe und/oder Sprachausgabe auf.

Bei dem Verfahren handelt es sich um ein computerimplementiertes Verfahren.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird eine Vorrichtung zum automatischen Generieren einer gewichteten Textausgabe und/oder Sprachausgabe auf Basis von Eingabedaten vorgeschlagen. Die Vorrichtung weist eine Auswerte- und Recheneinrichtung auf, die dazu eingerichtet ist, zumindest die folgenden Schritte auszuführen:
- Bereitstellen von, insbesondere graphischen, Eingabedaten, die Kennzeichnungsinformationen zu Objekten, die in den Eingabedaten umfasst sind, aufweisen; wobei die Kennzeichnungsinformationen eine jeweilige Objektbeschreibung- und/oder Klassifizierung und/oder eine Interaktionsinformation zwischen Objekten aufweist;
- Bereitstellen einer Gewichtungsinformation zu mindestens einem der Objekte und/oder zu mindestens einer der Kennzeichnungsinformationen; und
- Verarbeiten der Eingabedaten und/oder der Objekte und/oder der Kennzeichnungsinformationen und der Gewichtungsinformation durch mindestens ein maschinelles Lernmodell zum Generieren der auf Basis der Gewichtungsinformation gewichteten Textausgabe und/oder Sprachausgabe.

Die für das Verfahren gemachten Ausführungen gelten für die Vorrichtung entsprechend und umgekehrt. Es versteht sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Die Eingabedaten können vorzugsweise Bild- und/oder Videodaten und/oder Vektordaten aufweisen. Die Eingabedaten können Pixelinformationen oder Vektorinformationen und/oder Vektorgrafik-Informationen und/oder mehrdimensionale (insbesondere dreidimensionale) Geometrie- oder Vektorgraphik-Informationen aufweisen. Die Eingabedaten können durch eine Nutzereingabe über eine Eingabeoberfläche oder über strukturierte oder von einer Verarbeitungsinstanz zu strukturierende Spracheingabe erzeugt werden. Die Eingabedaten können Metadaten oder Metainformationen aufweisen, die durch eine Nutzereingabe über eine Eingabeoberfläche erzeugt werden. Die Nutzereingabe über eine solche Nutzeroberfläche weist vorzugsweise eine graphische Eingabe und/oder eine textuelle und/oder eine auditive Eingabe auf. Die Eingabedaten können vorzugsweise auch Textdaten aufweisen, beispielsweise eine Stichwortliste oder ähnliche Textdaten.

Die mindestens eine Gewichtungsinformation kann vorzugsweise zusammen mit den Eingabedaten bereitgestellt werden. Die mindestens eine Gewichtungsinformation kann auch durch einen Nutzer auf Basis der Eingabedaten erzeugt werden. Die mindestens eine Gewichtungsinformation kann auf textuelle, numerisch und/oder über Spracheingabe durch einen Nutzer erzeugt werden. Die mindestens eine Gewichtungsinformation kann auch automatisch auf Basis von Metainformationen oder sonstigen Gewichtungskriterien zu den Eingabedaten teilautomatisch oder automatisch erzeugt werden. Die mindestens eine Gewichtungsinformation kann auch durch eine Farbgebung gemäß einer vorbestimmten Skala und/oder durch eine Markierung gemäß einem vorbestimmten Markierungsschema angegeben sein. Die mindestens eine Gewichtungsinformation kann auch durch eine Spracheingabe eines Nutzers erzeugt werden, beispielsweise über ein Mikrofon, und darauf basieren, dass der Nutzer beispielsweise Schlüsselwörter und/oder Schlüsselbegriffe und/oder Schlüsselwortfolgen verwendet, um dadurch eine Gewichtung festzulegen.

Ein Objekt in Bild- und/oder Videodaten wird vorzugsweise durch eine Gruppe von Pixeln definiert, die zusammen ein erkennbares Muster und/oder eine Form bilden. Bevorzugt umfassen die Objekte ein oder mehrere geometrische Elemente. Bevorzugt umfassen die Objekte graphische Objekte. So kann ein Objekt als ein physisches Objekt, ein Subjekt und/oder zumindest ein Segment in den Bild- und/oder Videodaten umfassten Hintergrundes definiert sein. Ein Objekt in Vektordaten wird vorzugsweise durch geometrische Primitive definiert, die durch mathematische Gleichungen beschrieben werden können. Dies können bevorzugt physische Objekte, Subjekte und/oder sonstige mathematisch erfassbare Segmente oder Abschnitte oder Teile der Eingabedaten sein.

Kennzeichnungsinformationen beziehen sich vorzugsweise auf Metadaten oder Zusatzinformationen, die einem Objekt in einem Datensatz zugewiesen werden. Diese Informationen dienen vorzugsweise dazu, das Objekt eindeutig zu identifizieren und/oder von der Umgebung und/oder einem Hintergrund abzugrenzen und/oder ein Relevanzmaß zuzuordnen und/oder relevante Details über dessen Eigenschaften, Funktionsweise, Zustand und/oder Beziehung zu anderen Objekten bereitzustellen. Die Kennzeichnungsinformationen können vorzugsweise durch einen Nutzer bzw. eine Nutzereingabe, beispielsweise mit typischen digitalen Eingabemedien aber auch handschriftlich, erzeugt werden. Beispielsweise kann ein Nutzer handschriftliche Angaben auf einem Ausdruck erzeugen.

Auch kann ein Nutzer beispielsweise über einen Smart-Pen oder einem Smart-Pad oder einen Touchscreen oder ein sonstiges Eingabemedium, wie eine Maus oder eine Tastatur oder dergleichen, auf einer separaten bzw. überlagerten Graphikebene, die beispielsweise über eine Vektorgraphik gelegt werden kann, ein weiteres Objekt und/oder eine Kennzeichnungsinformation und/oder eine Gewichtungsinformation erzeugen. In einer solchen Graphikebene könnte zum Erzeugen einer Gewichtungsinformation beispielsweise als Maske jedem Pixel oder einer Gruppe von Pixeln ein numerischer Wert zugeordnet werden, indem der Nutzer beispielsweise eine bestimmte Region von Interesse einkreist oder umrandet oder auf sonstige Weise markiert. Das Anlegen der Gewichtungsinformation für eine solche Region kann dann beispielsweise durch einen Segmentierungsalgorithmus wie Region-Growing angelegt werden. Die Kennzeichnungsinformationen können textuelle oder numerische Informationen aufweisen. Die Kennzeichnungsinformationen kann auch teilautomatisch oder automatisch auf Basis der Eingabedaten bereitgestellt werden, insbesondere, wenn beispielsweise aufgrund einer Art oder Klasse des Objektes diesem eine bestimmte Eigenschaft oder Funktion zuweisbar ist.

Eine Objektbeschreibung umfasst vorzugsweise Informationen über ein Objekt, die dessen Merkmale, Attribute und/oder Eigenschaften umfassen. Dies kann physische Merkmale (z.B. Größe, Farbe, Form), funktionale Merkmale (z.B. Verwendung, Zweck) und andere relevante Details, Funktionen, Wirkweisen oder Eigenschaften umfassen, die vorzugsweise zur Identifikation und/oder zum Verständnis des Objekts beitragen.

Objektklassifizierung bezieht sich vorzugsweise darauf, Objekte in vordefinierte Kategorien, Gruppen und/oder Klassen einzuordnen. Diese Klassifizierung basiert vorzugsweise auf bestimmten Kriterien und/oder Merkmalen des Objekts und dient vorzugsweise dazu, ähnliche Objekte, insbesondere logisch oder einer Rangfolge entsprechend, zu gruppieren und/oder von anderen Objekten zu unterscheiden.

Interaktionsinformationen beschreiben vorzugsweise die Beziehungen und/oder Wechselwirkungen zwischen mindestens zwei, insbesondere verschiedenen, Objekten. Dies kann umfassen, wie Objekte miteinander interagieren, sich gegenseitig beeinflussen und/oder in (Wirk-) Verbindung stehen. Beispiele hierfür sind physische Interaktionen (z.B. Objekte, die sich berühren und/oder bewegen), logische Beziehungen (z. B. Hierarchien und/oder Netzwerke) und/oder funktionale Zusammenhänge (z. B. eine Komponente, die eine andere steuert). Interaktionsinformationen können vorzugsweise graphisch, beispielsweise durch Richtungsangaben per Pfeil oder durch sonstige graphische Symbole, erzeugt bzw. bereitgestellt werden. Die Interaktionsinformationen können beispielsweise manuell durch eine, insbesondere graphische und/oder textuelle und/oder sprachliche, Nutzereingabe bereitgestellt werden. Die Interaktionsinformationen können alternativ auch auf Basis von Objekterkennung und/oder Wirkverbindungserkennung in den Eingabedaten automatisch erkannt werden. Beispielsweise können solche Interaktionsinformationen aus Bild- und/oder Videodaten durch semantische Segmentierung, insbesondere mittels eines Convolutional Neural Networks (CNNs), extrahiert werden, wobei beispielsweise aneinander angrenzenden Objekte als interagierend erkannt werden können, und auf Basis dessen Interaktionsinformationen erzeugbar sind. Die Interaktionsinformationen können auch als Metadaten bei dem Erzeugen der Eingabedaten erzeugt werden.

Das vorliegende Verfahren hat den Vorteil, dass auf Basis der mindestens einen Gewichtungsinformation die gewichtete Textausgabe und/oder Sprachausgabe generiert werden kann. So ist es möglich, durch Vergabe und/oder Angabe der mindestens einen Gewichtungsinformation zu Objekten oder sonstigen Informationen in den Eingabedaten eine Gewichtung für die zu generierende Textausgabe vorzunehmen, um derart beispielsweise das mindestens eine maschinelle Lernmodell, vorzugsweise ein Large Language Modell aufweisend, dazu zu veranlassen, nur solche Informationen oder vornehmlich solche Informationen oder einer Rangfolge oder Wichtigkeitsabfolge entsprechend solche Informationen in der gewichteten Textausgabe und/oder Sprachausgabe zu benennen. Mit anderen Worten können durch die mindestens Gewichtungsinformation Präferenzen bezüglich der Eingabedaten festgelegt werden, auf deren Basis die mindestens eine Text- und/oder Sprachausgabe erzeugt werden kann. Dadurch wird verhindert, dass in der mindestens einen Text- und/oder Sprachausgabe Informationen verarbeitet werden, die im Hinblick auf die Eingabedaten eher unbedeutend oder unerwünscht sind. Anders ausgedrückt kann verhindert werden, dass in der mindestens einen Text- und/oder Sprachausgabe Informationen nicht verarbeitet werden, die im Hinblick auf die Eingabedaten bedeutend und erwünscht sind. Dadurch wird dem mindestens eine maschinellen Lernmodell mindestens eine Bedingung bzw. Einschränkung gegeben, welche bei dem semantischen Erzeugen der Text- und/oder Sprachausgabe mindestens zu berücksichtigen ist. Dadurch wird verhindert, dass das maschinelle Lernmodell, aufweisend ein großes Sprachmodell, auf zufällige Weise eine Text- und/oder Sprachausgabe zu in den Eingabedaten umfassten Informationen generiert, bei denen ggf. wichtige Informationen unterschlagen, Zusammenhänge nicht oder nicht richtig erkannt, und/oder unwichtige Informationen erwähnt werden. Durch die mindestens eine Gewichtungsinformation wird somit die Präzision der Text- und/oder Sprachausgabe, gemessen an den Eingabedaten, die automatisch in Text oder Sprache übersetzt werden sollen, verbessert. Ferner kann durch das Bereitstellen der mindestens einen Gewichtungsinformation eine Modellleistung des mindestens einen maschinellen Lernmodells gesteigert werden, da eine Kostenfunktion bzw. Verlustfunktion im Hinblick auf die Eingabedaten optimiert werden kann.

In einem weiteren Aspekt wird vorgeschlagen, dass das Bereitstellen der Eingabedaten aufweist: Bereitstellen von Bilddaten durch einen Scan einer, insbesondere technischen, Skizze und/oder Graphik und/oder Zeichnung eines Nutzers; und/oder Bereitstellen von Bilddaten und/oder von Vektordaten, insbesondere einer technischen Skizze und/oder Graphik und/oder Zeichnung, die durch einen Nutzer mittels eines Programms zur graphischen Datenverarbeitung erstellbar ist/sind; und/oder Bereitstellen von Bild- und/oder Videodaten auf Basis einer Kamera- oder Videoaufnahme, die mittels eines optischen Sensors erfolgt.

Bilddaten sind vorzugsweise Daten, die Bildinformationen in Form von Pixeln oder als Vektorgraphik aufweisen. Der Prozess des Digitalisierens, um die Bilddaten zu erhalten, erfolgt vorzugweise durch Scannen mittels eines Scanners. Der Ursprung der Bilddaten sind vorzugsweise technische Skizzen, Grafiken und/oder Zeichnungen, die von einem Nutzer im Papierformat erstellt werden. Diese Elemente werden durch den Scanvorgang in digitale Bilddaten umgewandelt, die dann durch das vorliegende Verfahren, insbesondere durch das mindestens eine maschinelle Lernmodell, verarbeitet werden können, um die mindestens eine Textausgabe zu erzeugen.

Bilddaten und/oder Vektordaten beschreiben vorzugsweise digitale Daten, die Rasterbilder (Bilddaten) und/oder mathematisch definierte Grafiken (Vektordaten) aufweisen. Die Bilddaten und/oder Vektordaten können vorzugsweise technische Skizzen, Grafiken und/oder Zeichnungen repräsentieren. Die Bilddaten und/oder Vektordaten werden vorzugsweise durch einen Nutzer mit Hilfe von Softwaretools zur grafischen Datenverarbeitung (z.B. CAD-Programme, Fotobearbeitungsprogramme, Graphikprogramme, Präsentationsprogramme wie Power-Point, Planungsprogramme, die Zeitverläufe wie Gantt-Charts oder Unified Modelling Language erstellen etc.) erstellt. Auch ein eigenständiges Softwaretool zur grafischen Datenverarbeitung ist möglich. Grundsätzlich ist es auch möglich, die graphischen Eingabedaten unter Verwendung eines maschinellen Lernmodells bzw. eines Algorithmus der künstlichen Intelligenz zum Generieren von Bilddaten zu erzeugen, wie beispielsweise DALL-E.

Bild- und/oder Videodaten sind digitale Dateien, die Standbilder (Fotos) und/oder bewegte Bilder (Videos) aufweisen. Diese Daten stammen vorzugsweise von Aufnahmen, die mit einer Kamera oder einem Videogerät gemacht werden. Die Bild- und/oder Videodaten werden vorzugsweise durch einen optischen Sensor erfasst. Der optische Sensor kann eine Kamera, ein Lidar-Sensor, ein Radar-Sensor, ein Ultraschallsensor sein.

Beispielhaft kann das vorliegende Verfahren dazu verwendet werden, Bild- und/oder Videodaten als die Eingabedaten von einer Verkehrssituation bereitzustellen. Die Bild- und/oder Videodaten können beispielsweise von einer Verkehrsüberwachungskamera erfasst werden. Die Bild- und/oder Videodaten können beispielsweise Aufnahmen von einer Straßenkreuzung liefern. Im Falle eines Auffahrunfalls oder eines sonstigen Unfalls oder eines Verkehrsdeliktes kann es bevorzugt sein, dass die Bild- und/oder Videodaten als Eingabedaten dienen, um beispielsweise einen automatischen Unfallreport als Textausgabe zu erstellen. Dabei können die Bild und/oder Videodaten beispielsweise durch das mindestens eine maschinelle Lernmodell, beispielsweise aufweisend ein Klassifikations- und/oder semantisches Segmentierungsmodel, automatisch vorverarbeitet werden, um zumindest einen Teil der Objekte und/oder Kennzeichnungsinformationen (z. B. Fahrzeugtyp-Informationen, Geschwindigkeitsinformationen, Richtungsinformationen, Nummernschild-Informationen, Ampelschaltungsinformationen, Verkehrszeichen-Informationen, und/oder Straßenkennzeichnungsinformationen, etc.) automatisch aus den Bild- und/oder Videodaten zu extrahieren. Ferner können vorzugsweise durch einen Nutzer weitere Kennzeichnungsinformationen manuelle oder teilautomatisch (zum Beispiel durch Vorauswahl-Vorschläge) ergänzt werden. Ferner kann der Nutzer, beispielsweise über ein entsprechend ausgebildetes Softwaretool, die mindestens eine Gewichtungsinformation für die in den Bild- und/oder Videodaten umfassten Objekte und/oder Kennzeichnungsinformationen bereitstellen. Die mindestens eine Gewichtungsinformation kann beispielsweise auf Basis Domänenwissen des Nutzers erzeugt werden. Alternativ kann die mindestens eine Gewichtungsinformation auch zumindest teilweise automatisch über Vergleich mit vorbekannten Gewichtungsinformationen, beispielsweise von ähnlichen Lebenssachverhalten, durch das mindestens eine maschinelle Lernmodell oder einen sonstigen Vergleichsalgorithmus erzeugt werden. Der Ausgabetext kann dann auf Basis der mindestens einen Gewichtungsinformation automatisch durch das mindestens eine maschinelle Lernmodell, das ein generatives Sprachmodell, beispielsweise auch großes Sprachmodell (LLM) aufweist, aus den Bild- und/oder Videodaten generiert werden, um derart beispielsweise einen Unfallbericht oder einen Deliktbericht zu erzeugen.

Ein Ähnliches Vorgehen ist auch zum automatischen Erzeugen einer Klageschrift oder einer Anzeigeschrift als die Textausgabe denkbar, wobei hier als Eingabedaten vorzugsweise Bild- und/oder Videodaten, die entsprechend vor- und/oder nachverarbeitet werden können, dienen können. Alternativ oder ergänzend kann auch eine Sachverhaltsskizze mit Wirkzusammenhängen und/oder sonstigen Kennzeichnungen als Eingabedaten dienen. Eine solche Sachverhaltsskizze kann vorzugsweise durch ein entsprechendes Softwaretool erstellt werden. Alternativ kann eine solche Sachverhaltsskizze auch durch eine Handskizze bereitgestellt werden, die dann über einen Scanvorgang digitalisiert, und derart in Form von Bilddaten oder Vektordaten als die Eingabedaten bereitgestellt werden kann.

In einem weiteren Aspekt wird vorgeschlagen, dass die Kennzeichnungsinformationen zu den Objekten bereitgestellt sind:
durch mindestens eine graphische Objekteigenschaft, insbesondere eine Größe und/oder Form und/oder Art und/oder Erscheinung, und/oder
durch eine textuelle Objektkennzeichnung und/oder durch Metainformationen; und wobei die Kennzeichnungsinformationen zumindest teilweise automatisch, insbesondere durch einen Abgleich eines der in den Eingabedaten umfassten Objekte mit vorbekannten Objekten mittels des mindestens einen maschinellen Lernmodells, erzeugbar und/oder verarbeitbar sind; und/oder
wobei die Kennzeichnungsinformationen zumindest teilweise durch ein manuelles Kennzeichnen erzeugbar sind.

Die Größe beschreibt vorzugsweise die Dimensionen eines Objekts. Die Form beschreibt vorzugsweise eine äußere Gestalt und/oder Kontur eines Objekts. Die Art beschreibt vorzugsweise eine Kategorie oder einen Typ eines Objekts. Die Erscheinung beschreibt vorzugsweise eine visuelle Darstellung eines Objekts, die beispielsweise Farbe und/oder Textur umfassen kann. Eine textuelle Objektkennzeichnung beschreibt vorzugsweise eine beschreibende und/oder identifizierende Textinformation, die ein Objekt näher spezifiziert. Die Metainformationen beschreiben vorzugsweise zusätzliche Daten, die Kontext und/oder zusätzliche Informationen zum Objekt bereitstellen. Die Metainformationen können beispielsweise Textinformationen und/oder numerische Informationen aufweisen, die nicht auf graphische Weise in den Eingabedaten umfasst sind, sondern auf andere Art und Weise in den Eingabedaten umfasst sein können. Die Metainformationen können beispielsweise einen Bezug aufweisen, insbesondere eine Referenz auf Koordinaten und/oder Bezugszeichen, etc.

Diese Kennzeichnungsinformationen können durch automatische Generierung oder Verarbeitung erzeugt werden. Dies erfolgt vorzugsweise durch den Abgleich eines der in den Eingabedaten enthaltenen Objekte mit vorbekannten Objekten mithilfe mindestens eines maschinellen Lernmodells, das beispielsweise ein Klassifizierungsmodell und/oder ein semantisches Segmentierungsmodell aufweist. Auch andere Vergleichsalgorithmen, die keine künstliche Intelligenz aufweisen, sind denkbar. Durch diesen Abgleich können bestimmte Merkmale vorzugsweise automatisch erkannt und vorzugsweise zumindest einigen Objekten zugeordnet werden. Auch ein manuelles Kennzeichnen ist möglich. Zusätzlich oder alternativ können die Kennzeichnungsinformationen also durch manuelle Eingabe und/oder Markierung erzeugt werden. Dies kann bevorzugt sein, wenn die automatische Erkennung nicht ausreichend ist oder zusätzliche, spezifische Informationen benötigt werden, die beispielsweise auf Basis von Fachwissen bereitgestellt werden können. Dieses Vorgehen ermöglicht eine flexible und umfassende Bereitstellung von Kennzeichnungsinformationen, die automatisierte als auch manuelle Methoden einbezieht, um eine präzise und informative Kennzeichnung der Eingabedaten zu ermöglichen.

In einem weiteren Aspekt wird vorgeschlagen, dass die Objektbeschreibung mindestens eine Objektfunktionalität und/oder einen Funktionsumfang aufweist, und/oder wobei die Klassifizierung eine Objektklasse und/oder einen Objekttype und/oder eine Objektgruppe aufweist, und/oder
wobei die Interaktionsinformation eine Information zu mindestens einem Wirkzusammenhang und/oder einer Wirkverbindung zwischen mindestens zwei Objekten aufweist,
wobei die Objektbeschreibung- und/oder Klassifizierung und/oder die Interaktionsinformation automatisch generierbar oder manuell erzeugbar ist/sind.

Es wird vorgeschlagen, dass die Objektbeschreibung mindestens eine Objektfunktionalität und/oder einen Funktionsumfang aufweist. Dies bedeutet vorzugsweise, dass die Beschreibung eines Objekts detaillierte Informationen über die spezifischen Funktionen oder den gesamten Funktionsumfang des Objekts aufweist. Beispielsweise könnte dies die Aufgaben und/oder Fähigkeiten eines Geräts oder einer Software umfassen.

Darüber hinaus wird vorgeschlagen, dass die Klassifizierung eine Objektklasse und/oder einen Objekttyp und/oder eine Objektgruppe aufweist. Dies bedeutet vorzugsweise, dass jedes oder zumindest ein Teil der Objekte anhand bestimmter Kriterien in eine Kategorie eingeordnet wird. Eine Objektklasse könnte eine breite Kategorie darstellen, wie zum Beispiel "elektronische Geräte" oder "mechanische Komponente", während ein Objekttyp eine spezifischere Unterkategorie darstellen könnte, wie "Smartphone" oder "Welle". Eine Objektgruppe kann eine Sammlung ähnlicher Objekte darstellen, die aufgrund gemeinsamer Merkmale zusammengefasst werden können, wie zumindest mehrere Geräte eines bestimmten Herstellers und/oder zumindest mehrere Objekte mit einem zumindest ähnliche Funktionsumfang und/oder einer zumindest ähnlichen Wirkweise.

Weiterhin wird vorgeschlagen, dass die Interaktionsinformation eine Information zu mindestens einem Wirkzusammenhang und/oder einer Wirkverbindung zwischen mindestens zwei Objekten aufweist. Dies bedeutet vorzugsweise, dass detaillierte Informationen darüber bereitgestellt werden, wie zwei oder mehr Objekte miteinander interagieren und/oder sich gegenseitig beeinflussen. Ein Wirkzusammenhang könnte beispielsweise beschreiben, wie ein Smartphone mit einer Smartwatch synchronisiert wird. Eine Wirkverbindung könnte eine spezifische Art der Kommunikation (WiFi, Bluetooth, etc.) zwischen diesen Geräten detailliert beschreiben.

Die Objektbeschreibung und/oder die Klassifizierung und/oder die Interaktionsinformation können teilweise automatisch generiert und/oder teilweise manuell erzeugt werden. Die automatische Generierung kann durch den Einsatz von Algorithmen und maschinellem Lernen erfolgen, wobei die relevanten Informationen dabei selbstständig gesammelt und/oder kategorisiert werden können. Die manuelle Erzeugung kann die direkte Eingabe und/oder Pflege der Informationen durch Benutzer oder Experten aufweisen, was Flexibilität und Präzision in der Beschreibung ermöglicht.

In einem weiteren Aspekt wird vorgeschlagen, dass für mehrere Objekte und/oder für mehrere Kennzeichnungsinformationen jeweils eine Gewichtungsinformation bereitgestellt wird, und
wobei das mindestens eine maschinelle Lernmodell auf Basis der jeweiligen Gewichtungsinformation eine Rangfolge und/oder Abfolge einer, insbesondere textuellen und/oder auditiven, Beschreibung des jeweiligen Objekts und/oder der jeweiligen Kennzeichnungsinformation in der generierten, gewichteten Textausgabe und/oder Sprachausgabe erzeugt.

Besonders bevorzugt wird also zumindest für einen Teil der Objekte und/oder Kennzeichnungsinformationen jeweils eine Gewichtungsinformation bereitgestellt. Dadurch ist es beispielsweise möglich zwei oder mehreren Objekten und/oder zwei oder mehreren Kennzeichnungsinformationen die gleiche Gewichtung bzw. Wichtigkeit zuzuschreiben. Auch ist es möglich, mehreren Objekten und/oder Kennzeichnungsinformationen jeweils unterschiedliche Gewichtungsinformationen zuzuschreiben, um derart beispielsweise eine Rangfolge bzw. Abfolge der Wichtigkeit festzulegen, in der die Objekte und/oder Gewichtungsinformationen in der mindestens einen Textausgabe genannt werden. Dadurch kann es beispielsweise möglich sein, durch Angabe der jeweiligen Gewichtungsinformation ein Objekt und/oder eine Kennzeichnungsinformation für die Generierung der Textausgabe zu bevorzugen. Andererseits kann es durch die Vergabe der jeweiligen Gewichtungsinformation möglich sein, ein Objekt oder eine Kennzeichnungsinformation gezielt "auszublenden" bzw. in der Textausgabe gezielt nicht zu beschreiben, obwohl es/sie in den Eingabedaten vorhanden ist/sind.

Es versteht sich, dass nicht jedem Objekt oder jeder Kennzeichnungsinformationen eine Gewichtungsinformation zugewiesen werden muss, sondern beispielsweise einigen Objekten und/oder Kennzeichnungsinformationen keine oder eine "per Default" vorbestimmte Gewichtungsinformation zugewiesen sein kann.

In einem weiteren Aspekt wird vorgeschlagen, dass das mindestens eine maschinelle Lernmodell auf Basis der jeweiligen Gewichtungsinformation, insbesondere entsprechend einer zumindest einstufigen Rangfolge, diejenigen Objekte und/oder Kennzeichnungsinformationen in der gewichteten Textausgabe beschreibt, die mindestens ein vorbestimmtes Gewichtungskriterium erfüllen.

Mit anderen Worten können für die Generierung der mindestens einen Textausgabe diejenigen Informationen der Eingabedaten (vorzugsweise Kennzeichnungsinformationen und/oder Objektinformationen und/oder Metainformationen) bevorzugt durch das maschinelle Lernmodell bzw. LLM verarbeitet werden, die ein bestimmtes Gewichtungskriterium erfüllen, beispielsweise hoch oder gering gewichtet sind. Wenn mehrere Gewichtungskriterien vorhanden sind, kann auch eine mehrstufige Erzeugung bzw. Generierung von textuellen Beschreibungen der Eingabedaten erfolgen, wobei die Rangfolge vorzugsweise von einer Abstufung der Gewichtungsinformationen über mehrere Gewichtungskriterien erfolgen kann.

In einem weiteren Aspekt wird vorgeschlagen, dass das mindestens eine maschinelle Lernmodell auf Basis der jeweiligen Gewichtungsinformation mehrere Textausgaben oder zumindest eine mehrfach untergliederte Textausgabe in Abhängigkeit mehrerer Gewichtungskriterien erzeugt.

Derart ist es beispielsweise möglich, eine Textausgabe zu erzeugen, in der zuerst die wichtigsten bzw. am höchsten gewichteten Kennzeichnungsinformationen und/oder sonstige Informationen der Eingabedaten textuell wiedergegeben werden. In der gleichen Textausgabe oder einer separaten Textausgabe können dann weitere, jedoch weniger hoch gewichtete Kennzeichnungsinformationen und/oder sonstige Informationen der Eingabedaten textuell wiedergegeben werden, insbesondere bis alle Informationen der Eingabedaten, zu denen eine Gewichtungsinformation existiert, textuell verarbeitet bzw. wiedergegeben wurden. Besonders bevorzugt kann das Gewichtungskriterium einen Gewichtungsgrenzwert oder eine Abstufung von Gewichtungen aufweisen. Auch ein Gewichtungsintervall ist denkbar.

In einem weiteren Aspekt wird vorgeschlagen, dass das mindestens eine maschinelle Lernmodell eine großes Sprachmodell und/oder ein Convolutional Neural Network und/oder ein Transformer-Modell und/oder weitere Modelltypen aufweist.

Das mindestens eine maschinelle Lernmodell weist vorzugsweise mindestens ein großes Sprachmodell (Large Language Model, LLM) auf. Vorliegend umfasst der Begriff "großes Sprachmodell" zusammenfassend sämtliche, insbesondere generativen, Sprachmodelle, wie z. B. auch BERT oder dergleichen, unabhängig von der Anzahl der Freiheitsgrade und/oder Parameter. Derart kann die mindestens eine Textausgabe auf Basis der Eingabedaten und/oder der Objekte und/oder der Kennzeichnungsinformationen und der mindestens einen Gewichtungsinformation automatisch generiert werden. Das mindestens eine maschinelle Lernmodell kann ferner ein Klassifikationsmodell zum Klassifizieren von Objekten in graphischen Eingabedaten aufweisen. Das mindestens eine maschinelle Lernmodell kann ferner semantisches Segmentierungsmodell (wie zum Beispiel Segment Anything oder You Only Look Once) aufweisen. Das mindestens eine maschinelle Lernmodell kann ferner ein Hybridmodell aufweisen, das einen Modellanteil aufweist, der auf Basis von künstlicher Intelligenz agiert, und einen Modellanteil aufweist, der ein analytisches oder statistisches Modell umfasst. Grundsätzlich kann das mindestens eine maschinelle Lernmodell jeden Modelltyp aufweisen, der sich dazu eignet, die Eingabedaten vorzuverarbeiten (data pre-processing models), zu verarbeiten (data processing models) und/oder nachzubearbeiten (data post-processing models), um derart die Kennzeichnungsinformationen und/oder die Objekte zumindest teilweise automatisch aus den Eingabedaten zu extrahieren. Das mindestens eine maschinelle Lernmodell kann als Algorithmus der künstlichen Intelligenz aufgefasst werden. Das mindestens eine maschinelle Lernmodell kann ein neuronales Netzwerk, vorzugsweise ein tiefes neuronales Netzwerk aufweisen. Das maschinelle Lernmodell kann vorzugsweise ein Transformer-Modell aufweisen. Das maschinelle Lernmodell kann vorzugsweise ein Encoder-Modell aufweisen. Das maschinelle Lernmodell kann vorzugsweise ein Faltungsnetzwerk (convolutional neural network, CNN) aufweisen. Das maschinelle Lernmodell kann vorzugsweise ein Faltungsnetzwerk (convolutional neural network, CNN) mit einem nachgeschalteten Decoder aufweisen.

Zumindest ein Teil der Kennzeichnungsinformationen und/oder der Objektinformationen kann/können in der Form eines Wissensgraphen aus den Eingabedaten extrahierbar sein. In diesem Fall kann es bevorzugt sein, wenn das mindestens eine maschinelle Lernmodell ein Graph-basiertes neuronales Netzwerk aufweist, das dazu ausgebildet ist, Graph-artige und/oder in einer Baumstruktur organisierte Informationen zu verarbeiten (bekannt als Graph neural networks, GNNS). Die Darstellung bzw. Organisation der Kennzeichnungsinformationen und/oder der Objektinformationen bzw. der Informationen über die Objekte als Wissensgraph oder als Baumstruktur kann vorzugsweise automatisch aus Benutzereingaben und/oder auf Basis von mit den Eingabedaten bereitgestellten Metadaten bzw. Metainformationen erzeugt werden. Die Vorbereitung der Kennzeichnungsinformationen und/oder der Objektinformationen bzw. der Informationen über die Objekte als Wissensgraph kann vorteilhaft sein, um die Verarbeitung durch ein LLM zur Erzeugung der Textausgabe zu erleichtern bzw. genauer zu machen, da das LLM dann ggf. die Baumstruktur, mitsamt der in der Baumstruktur umfassten Knoten sowie deren Informationsgehalt und/oder deren Wechselwirkungen bzw. Verbindungen textuell beschreiben kann. Die Informationen aus dem Wissensgraph können in einen Einbettungsraum überführt werden, um von dem LLM zur Erzeugung des Ausgabetextes verarbeitet zu werden.

Das mindestens eine maschinelle Lernmodell weist vorzugsweise ein lineares Modell zur Verarbeitung von Vektordaten auf. Ein solches lineares Modell kann eine lineare Regression, eine logistische Regression und/oder sonstige Entscheidungsbäume, wie z. B, Random Forest, und Ensemble-Methoden aufweisen. Das mindestens eine maschinelle Lernmodell weist vorzugsweise ein Gradient Boosting Modell auf, durch welches ein Ensemble-Ansatz beschrieben ist, der auf sequentiellen Verbesserungen basiert (z.B. XGBoost, LightGBM. Das mindestens eine maschinelle Lernmodell weist vorzugsweise ein K-Nächste Nachbarn (KNN) Modell auf. Das mindestens eine maschinelle Lernmodell weist vorzugsweise kann auch ein Support Vector Machine (SVM) Modell aufweisen. Das mindestens eine maschinelle Lernmodell weist vorzugsweise ein rekurrentes neuronale Netzwerk (RNN), beispielsweise auch Long Short-Term Memory (LSTM), auf, um speziell sequenzielle Daten und/oder zeitabhängige Merkmale aus den Eingabedaten zu verarbeiten. Das mindestens eine maschinelle Lernmodell kann vorzugsweise auch verschiedene Clustering-Ansätze umfassen, wie beispielsweise K-Means und/oder DBSCAN.

Das mindestens eine maschinelle Lernmodell kann also vorzugsweise eine Vielzahl von Modellen aufweisen, die je nach Anwendungsfall und/oder Art und Erscheinung der Eingangsdaten eingesetzt sein können, um derart alle Informationen aus den, insbesondere graphischen, Eingabedaten zu verarbeiten. Die verschiedenen Modelle können miteinander verschaltet sein, um derart beispielsweise eine Modellausgabe eines Modells als Modelleingabe für ein weiteres Modell bereitzustellen.

Das mindestens eine maschinelle Lernmodell ist vorzugsweise jeweils vortrainiert, so dass beispielsweise ein bereits vortrainiertes LLM als Basismodell für die vorliegende Anwendung eingesetzt werden kann. Die Modelle werden vorzugsweise nicht notwendigerweise eigens auf die vorliegende Anwendung zur Generierung der Textausgabe trainiert. Bevorzugt werden hingegen bereits trainierte Modelle verwendet. Gesamthaft kann jedoch eine Optimierung des mindestens einen maschinellen Lernmodells, insbesondere on-the-fly bzw. durch aktives Trainieren, erfolgen, um derart die Güte bzw. Modellleistung(en) zur Erzeugung der Textausgabe stetig zu verbessern. Dabei kann beispielsweise eine Güte der Textausgabe bewertet, und zum Angleichen von Hyperparametern des mindestens einen Modells eingesetzt werden, um derart die Güte der Textausgabe, insbesondere graduell, zu steigern. Dabei kann, im Falls von mehreren bzw. einer Vielzahl von maschinellen Lernmodellen ein isoliertes Optimieren eines der maschinellen Lernmodelle oder von mehreren maschinellen Lernmodellen, insbesondere durch Lösen eines mehrschichtigen Optimierungsproblems, erfolgen.

In einem weiteren Aspekt wird vorgeschlagen, dass das Verarbeiten der Eingabedaten und/oder der darin umfassten Objekte und/oder der Kennzeichnungsinformationen und der mindestens einen Gewichtungsinformation durch das mindestens eine maschinelle Lernmodell aufweist:
Verarbeiten von graphischen Informationen der Eingabedaten und/oder der darin umfassten Objekte und/oder der Kennzeichnungsinformationen und/oder der mindestens einen Gewichtungsinformation durch Klassifizieren und/oder Segmentieren durch das mindestens eine maschinelle Lernmodell und/oder durch Erfassen durch mindestens einen Bild-Muster-Erkennungs-Algorithmus und/oder durch einen Vektorraumabgleich, insbesondere eines Vektorraums einer Support Vector Machine und/oder eines Vektorraums eines Sprach-Embeddings oder dergleichen, und/oder durch mehrere voneinander unterschiedliche Bild-Muster-Erkennungs-Algorithmen; und/oder
Verarbeiten von textuellen Informationen der Kennzeichnungsinformationen und/oder der mindestens einen Gewichtungsinformation durch das mindestens eine maschinelle Lernmodell.

Werden beispielsweise Bild- und/oder Videodaten als die Eingabedaten bereitgestellt, können darin umfasste Objekte und/oder sonstige Kennzeichnungsinformationen (z. B., Wechselwirkungen zwischen Objekten) beispielhaft zumindest teilweise durch automatisches Klassifizieren und/oder semantisches Segmentieren durch ein entsprechendes Klassifizierungsmodell und/oder Segmentierungsmodell der künstlichen Intelligenz aus extrahiert werden. Es kann vorzugsweise auch ein manuelles Kuratieren der derart extrahierten Informationen, beispielsweise durch einen Nutzer, erfolgen, um derart die Richtigkeit der automatisch erkannten Informationen zu verifizieren. Derart können Fehler in der später generierten Textausgabe verhindert werden.

Werden beispielsweise die Eingabedaten in Form von Vektordaten bzw. Vektorgraphiken bereitgestellt, kann eine Extraktion von darin umfassten Objekten und/oder sonstigen Kennzeichnungsinformationen vorzugsweise durch ein entsprechend trainiertes maschinelles Lernmodell zur Verarbeitung von Vektordaten erfolgen.

Werden die Eingabe(roh-)daten über physisches Medium, wie zum Beispiel Papier, bereitgestellt, kann ein Digitalisieren über das Erstellen eines Scans erfolgen. Ein solcher Scan bzw. ein solches digitales Abbild einer physischen Graphik oder Darstellung, beispielsweise einer Handskizze, kann dann mittels Bild-Muster-Erkennungs-Algorithmus weiterverarbeitet werden, um darin umfasste Objekte für eine Klassifizierung und/oder Segmentierung und/oder Weiterverarbeitung vorzubereiten.

Wenn in den Eingabedaten bereits Textdaten, beispielsweise Schlagwörter und/oder Kennzeichnungen und/oder Namensgebungen und/oder sonstige Textinformationen umfasst sind, kann es bevorzugt sein, wenn derartige Informationen, insofern sie nicht bereits initial in einer maschinenlesbaren und/oder maschinenverarbeitbaren Form vorliegen, über einen Textextraktionsalgorithmus, beispielsweise eine OCR-Erkennung, in ein solches maschinenlesbares und/oder maschinenverarbeitbares Format gebracht werden, um dann beispielsweise unmittelbar oder durch Zwischenschaltung weiterer Verarbeitungsschritte (wie zum Beispiel einer Vektorisierung und/oder einer Text-Einbettungserzeugung, sogenanntes Embedding, etc.) durch das maschinelle Lernmodell, das ein LLM aufweisen kann, für die Textausgabe verarbeitet zu werden. Ein Embedding ist vorzugsweise ein Abbilden von Tokens auf Zahlen, vorzugsweise Vektoren, wobei ein Embedding beispielsweise zusammenhängende Tokens (insbesondere Worte, Silben und/oder Wortstämme aufweisen kann) und/oder eine vektorielle Nähe (Vektornorm, etc.) aufweisen kann. Somit lässt sich über die Vektornorm beispielsweise eine Art Abstand definieren. Das LLM kann die in den Eingabedaten umfassten Textinformationen vorzugsweise an einen Kontext und/oder ein Konzept, das vorzugsweise bestimmbar und/oder festlegbar ist, anpassen, um derart vorzugsweise eine grammatikalisch und/oder syntaktisch und/oder semantisch korrekte Begrifflichkeit in die Textausgabe zu ermöglichen.

In einem weiteren Aspekt wird vorgeschlagen, dass die mindestens eine Gewichtungsinformation durch eine, insbesondere manuelle, Nutzereingabe bereitgestellt wird, oder wobei die mindestens eine Gewichtungsinformation zumindest teilweise automatisch in Abhängigkeit mindestens eines Gewichtungskriteriums erzeugt wird.

Dies bedeutet, dass die mindestens eine Gewichtungsinformation vorzugsweise auf mehrere unterschiedliche Weisen bereitgestellt werden kann. Zum einen kann die Gewichtungsinformation direkt von einem Nutzer eingegeben werden. Dies erfolgt vorzugsweise durch Benutzerschnittstellen wie Tastaturen, Touchscreens oder andere Eingabegeräte. Der Nutzer hat hierbei vorzugsweise die Möglichkeit, spezifische Gewichtungswerte und/oder Präferenzen einzugeben, die dann bei der Generierung der Textausgabe berücksichtigt werden bzw. in diese einfließen. Diese manuelle Eingabe erlaubt es dem Nutzer, seine spezifischen Bedürfnisse und/oder Präferenzen direkt zu berücksichtigen und anzupassen. Auch kann derart beispielsweise Fachwissen und/oder Domänenwissen des Benutzers direkt in den Eingabedaten durch Gewichtungsinformationen abgebildet werden. Dadurch erfolgt ein Kuratieren der Eingabedaten, um die Güte der Generierung der Textausgabe zu verbessern. Die manuelle Bereitstellung der Gewichtungsinformation erfordert eine direkte Interaktion des Nutzers, bietet jedoch Flexibilität und Anpassungsmöglichkeiten an die spezifischen Bedürfnisse und/oder Präferenzen des Nutzers.

Alternativ oder ergänzend kann die mindestens eine Gewichtungsinformation auch zumindest teilweise automatisch, insbesondere auf Basis von Informationen der Eingabedaten, generiert werden. Diese automatische Erzeugung erfolgt vorzugsweise in Abhängigkeit von mindestens einem Gewichtungskriterium. Gewichtungskriterien könnten dabei verschiedene Faktoren umfassen, wie beispielsweise historische Daten, Nutzerverhalten, externe Bedingungen, Grenzwerte, Grenzintervalle und/oder sonstige vorgegebene Algorithmen. Beispielsweise kann die Gewichtungsinformation auch auf Basis einer Häufigkeit, in der Objekte und/oder Kennzeichnungsinformationen in den Eingabedaten umfasst sind, bewertet werden. Wenn beispielsweise in mehreren Bilddaten stets dasselbe Objekt umfasst ist, kann diesem Objekt automatisch eine hohe Gewichtung zugewiesen sein. Sind Objekte und/oder Kennzeichnungsinformationen hingegen nur selten vorhanden, beispielsweise festlegbar durch einen Schwellenwert, kann diesen Objekten und/oder Kennzeichnungsinformationen eine geringere Gewichtung zugeordnet werden. Auch eine mehrfache Abstufung, beispielsweise durch das Setzen mehrerer Schwellenwerte, ist dabei denkbar. Ein ähnliches Vorgehen kann auch mit sonstigen Metainformationen erfolgen. So kann das mindestens eine maschinelle Lernmodell dazu eingerichtet sein, die Objekte und/oder Kennzeichnungsinformationen und/oder sonstigen Metainformationen und deren Variierung aus den Eingabedaten selbst zu ermitteln, um so beispielsweise dem Nutzer mindestens eine Gewichtungsinformation vorzuschlagen. Diese Kriterien können analysiert und daraus die Gewichtungsinformationen berechnet werden, wodurch vorzugsweise eine konsistente und/oder objektive Gewichtung der Kennzeichnungsinformationen und/oder der Objekte und/oder von sonstigen (Meta-) Informationen, die in den Eingabedaten umfasst sein können, ermöglicht wird. Die automatische Erzeugung der Gewichtungsinformation ist ggf. effizienter und konsistenter, da sie auf objektiven Daten und festgelegten Regeln basiert. Dies reduziert den manuellen Aufwand und minimiert mögliche Benutzerfehler.

In einem weiteren Aspekt wird vorgeschlagen, dass das maschinelle Lernmodell ein großes Sprachmodell (LLM) umfasst, wobei, wenn die mindestens eine Kennzeichnungsinformation eine textuelle Information aufweist, die textuelle Information durch das LLM semantisch abstrahiert und/oder an einen konzeptuellen oder kontextuellen Zusammenhang der Eingabedaten und/oder der Textausgabe angepasst wird.

Das mindestens eine LLM abstrahiert vorzugsweise die mindestens eine textuelle Information semantisch, das heißt, das LLM hebt die Bedeutung der Textelemente auf eine höhere Ebene und extrahiert vorzugsweise wesentliche Konzepte. Die textuelle Information wird durch das LLM vorzugsweise an den konzeptuellen Zusammenhang der Eingabedaten angepasst, wodurch die Bedeutung der Informationen in einem breiteren Kontext verstanden und interpretiert wird. Die textuelle Information wird durch das LLM vorzugsweise an den kontextuellen Zusammenhang der Textausgabe angepasst. Das bedeutet, dass die Informationen in Bezug auf den spezifischen Anwendungs- oder Nutzungskontext modifiziert werden, um eine präzise und relevante Darstellung zu ermöglichen, wobei dabei vorzugsweise auf das umfassende Wissen des insbesondere auf Basis von Millionen von Textdaten trainierte LLM zugegriffen werden kann. Diese Merkmale ermöglichen, textuelle Informationen der Eingabedaten nicht nur zu verstehen, sondern sie auch an den relevanten Kontext anzupassen und eine semantisch präzise und kontextgerechte Darstellung und Formulierung zu liefern. Dadurch kann die sprachliche Qualität der Textausgabe erhöht werden, selbst wenn in den Eingabedaten kontext- und/oder konzeptferne Begrifflichkeiten und/oder Benennungen umfasst waren.

In einem weiteren Aspekt wird vorgeschlagen, dass das maschinelle Lernmodell ein CNN und einen Decoder umfasst. Der Decoder ist vorzugsweise dem CNN unmittelbar oder mittelbar nachgeschaltet bzw. an dieses angehängt. Der Decoder bekommt also beispielsweise die Ausgabedaten des CNNs um diese weiterzuverarbeiten. Derart können beispielsweise Text- und/oder Bilddaten und/oder strukturierte Daten als Eingabedaten eingegeben werden, um dann die mindestens eine Textausgabe zu erzeugen. Die mindestens eine Textausgabe kann dabei vorzugsweise auch einen Bildanteil und/oder sonstige strukturierte Daten aufweisen, um derart beispielsweise als Textausgabe ein Formular oder ähnliches auf Basis der mindestens einen Gewichtungsinformation zu erzeugen.

In einer Ausführungsform ist vorgesehen, dass die mindestens eine Gewichtungsinformation als kontinuierlicher Skalarwert in einem zusätzlichen Transparenz- bzw. Alpha-Kanal einer Bilddatei (insbesondere bei Eingabedaten im RGBA-Format) hinterlegt ist. Dabei entspricht jeder Pixelwert im Alpha-Kanal einem Gewichtungswert zwischen 0 und 1. Das mindestens eine maschinelle Lernmodell ist dabei dazu ausgebildet, diesen Alpha-Kanal unabhängig von der visuellen Objektklassifikation auszuwerten, sodass der Grad der semantischen Relevanz der betreffenden Bildbereiche gezielt beeinflussbar ist.

In einer weiteren Ausführungsform kann dieser Gewichtungskanal während einer Nutzerinteraktion dynamisch verändert werden. So kann beispielsweise mittels eines Eingabestifts, einer Augmented-Reality-Brille oder eines sonstigen Eingabegeräts eine Echtzeitmodifikation der Gewichtung vorgenommen werden. Die Änderungen der Gewichtungswerte werden dabei unmittelbar in die Text- und/oder Sprachausgabe rückgekoppelt, sodass sich das Ausgabeergebnis adaptiv an die Nutzerintention anpasst.

In einer weiteren bevorzugten Ausführungsform ist die Gewichtungsinformation hierarchisch strukturiert. Die Hierarchie weist mindestens zwei Ebenen auf: Auf einer ersten Ebene erfolgt eine Gewichtung auf Gruppenebene, wobei mehrere Objekte zu Objektgruppen oder Clustern zusammengefasst werden, denen ein gemeinsamer Gewichtungswert zugeordnet ist. Auf einer zweiten Ebene erfolgt dann eine relative Gewichtung innerhalb der Gruppe, um so feingranulare Unterschiede zwischen den gruppierten Objekten herauszustellen. Diese Strukturierung erlaubt eine differenzierte Einflussnahme auf die Priorisierung von Informationen in der generierten Text- oder Sprachausgabe.

In einer weiteren Ausführungsform werden die Kennzeichnungsinformationen sowie die Gewichtungsinformationen in einen Wissensgraphen überführt. Dieser Wissensgraph umfasst Knoten und Kanten, wobei die Knoten einzelne Objekte oder Kennzeichnungen und die Kanten Relationen oder Interaktionen darstellen. Das mindestens eine maschinelle Lernmodell weist dabei ein graphbasiertes neuronales Netzwerk (Graph Neural Network, GNN) auf, das dazu eingerichtet ist, Gewichtungswerte entlang der Kantenbeziehungen zu propagieren. Dadurch können auch bislang nicht gewichtete Knoten implizit eine Sekundärgewichtung erhalten, was insbesondere zur kontextsensitiven Hervorhebung bislang marginaler Objekte dient.

In einer bevorzugten Weiterbildung kann der Wissensgraph mit einer domänenspezifischen Ontologie (z. B. einem Regelwerk der Straßenverkehrsordnung oder einem Normkatalog) verknüpft sein. Auf diese Weise ist es möglich, Normverletzungen oder regelrelevante Sachverhalte mit erhöhter Priorität in der Ausgabe hervorzuheben. Diese domänenspezifische Kontextualisierung kann dabei sowohl durch explizite Annotation als auch durch semantische Ontologieverknüpfung erfolgen.

In einer weiteren Ausführungsform wird die mindestens eine Gewichtungsinformation direkt als hyperparametrischer Einflussfaktor in die Verlustfunktion des großen Sprachmodells eingebunden. Dabei wird beispielsweise ein skalierbarer Gewichtungsparameter λ verwendet, der die Relevanz der korrespondierenden Inhalte im Wahrscheinlichkeitsraum der Textgenerierung beeinflusst. So kann eine gezielte Regularisierung der Token-Selektion erfolgen, um sicherzustellen, dass hochgewichtete Inhalte in der Textausgabe bevorzugt berücksichtigt werden.

In einer weiteren Ausgestaltung wird ein Reinforcement-Learning-from-Human-Feedback-Verfahren (RLHF) eingesetzt, bei dem die Gewichtungsinformationen Bestandteil der Reward-Funktion sind. Das große Sprachmodell (LLM) kann dabei on-the-fly oder periodisch nachtrainiert werden, wobei Nutzerfeedback mit höher gewichteten Inhalten überproportional in die Optimierung einfließt.

In einer alternativen oder ergänzenden Ausführungsform erzeugt das Verfahren gleichzeitig mehrere Textausgaben für unterschiedliche Zielgruppen oder Anwendungsformate. Die jeweiligen Textausgaben können dabei durch unterschiedliche Templates oder Ausgabeprofile bestimmt sein (z. B. "technische Zusammenfassung", "rechtliche Bewertung", "Sprachausgabe in einfacher Sprache"), wobei jede Ausgabe ein separates Gewichtungsprofil zugrunde legt.

In einer weiteren Ausführungsform erfolgt eine automatisierte Plausibilitätsprüfung der generierten Textausgabe. Hierzu wird ein zweites, insbesondere auf semantische Konsistenzprüfung spezialisiertes Sprachmodell eingesetzt, das überprüft, ob alle Informationsbestandteile mit einem Gewichtungswert oberhalb eines definierten Schwellenwertes in der Textausgabe enthalten sind. Werden Lücken oder Inkonsistenzen erkannt, erfolgt eine erneute Generierung oder eine iterativ ergänzte Teilausgabe.

In einer Ausführungsform der Vorrichtung umfasst die Auswerte- und Recheneinrichtung einen Attention-Co-Prozessor, der speziell dazu ausgebildet ist, den gewichtungsrelevanten Zusatzkanal (z. B. den Alpha-Kanal) in die Berechnung der Self-Attention-Layer eines Transformermodells einzuspeisen. Der Alpha-Kanal wird dabei als additive oder multiplicative Gewichtungsschicht über die Attention-Map gelegt, wodurch die Aufmerksamkeitsverteilung des Modells gezielt steuerbar ist. Diese hardwareseitige Unterstützung erlaubt eine beschleunigte und gleichzeitig inhaltsgesteuerte Generierung der gewichteten Textausgabe.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Festplatten oder Halbleiterspeicher, bspw. SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Die beschriebenen Aspekte und deren Weiterbildungen lassen sich beliebig miteinander kombinieren.

Weitere mögliche Ausgestaltungen, Weiterbildungen, Aspekte und/oder Implementierungen der Erfindung weisen auch nicht explizit genannte Kombinationen von den zuvor genannten oder nachstehend noch zu erläuternden Merkmalen auf. Eine, ein wird vorliegend als "mindestens eine" bzw. "mindestens ein" verstanden.

Wenn vorliegend "Textausgabe" oder "Sprachausgabe" geschrieben ist, ist darunter jeweils vorzugsweise "Text- und/oder Sprachausgabe" zu verstehen. Wenn "Gewichtungs-information" geschrieben ist, ist darunter "mindestens eine Gewichtungsinformation" oder "Gewichtungsinformationen" zu verstehen. Das zuletzt Genannte gilt auch für alle anderen, genannten Merkmale, die im Singular bezeichnet sind. Vorliegend wird der Begriff "Objekte" vorzugsweise auch so verstanden, dass in den Eingabedaten auch nur ein Objekt oder mehrere Objekte umfasst sein kann/können.

### Kurze Beschreibung der Zeichnungen

Die beiliegenden Zeichnungen sollen ein weiteres Verständnis der Aspekte der Erfindung vermitteln. Sie veranschaulichen Ausführungsformen und dienen im Zusammenhang mit der Beschreibung der Erklärung von Prinzipien und Konzepten der Erfindung.

Andere Aspekte und zumindest mehrere der vorliegenden Vorteile ergeben sich im Hinblick auf die beigefügten Zeichnungen. Die darin dargestellten Elemente sind nicht notwendigerweise maßstabsgetreu zueinander gezeigt.
- Fig. 1: zeigt ein schematisches Flussdiagramm eines Ausführungsbeispiels des vorliegenden Verfahrens.
- Fig. 2: zeigt eine schematische Ansicht eines Anwendungsfalls des vorliegenden Verfahrens in einer seiner Ausführungen.
- Fig. 3: zeigt eine schematische Ansicht eines Anwendungsfalls des vorliegenden Verfahrens in einer seiner Ausführungen.
- Fig. 4: zeigt eine schematische Ansicht eines Anwendungsfalls des vorliegenden Verfahrens in einer seiner Ausführungen.
- Fig. 5: zeigt eine schematische Ansicht einer beispielhaften Vorrichtung.

### Detaillierte Beschreibung der Zeichnungen

In den Figuren der Zeichnungen bezeichnen gleiche Bezugszeichen gleiche oder funktionsgleiche Elemente, Bauteile und/oder Komponenten, insofern nicht etwas Gegenteiliges angegeben wird.

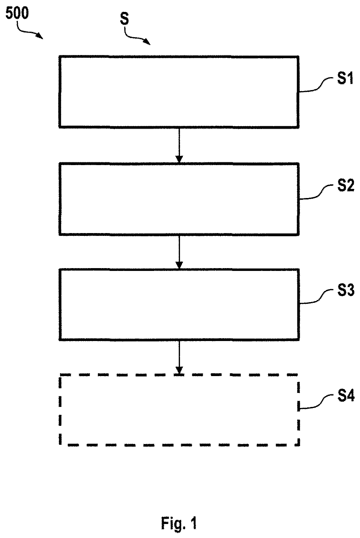

Fig. 1 zeigt ein schematisches Flussdiagramm eines Verfahrens S zum automatischen Generieren einer gewichteten Textausgabe und/oder Sprachausgabe auf Basis von Eingabedaten.

Das Verfahren S ist bevorzugt computerimplementiert. Das Verfahren S ist mit anderen Worten vorzugsweise mittels eines Computers oder eines Gerätes zur Datenverarbeitung ausführbar. Das Verfahren S kann auch derart ausführbar sein, dass es als Webapplikation ausführbar ist, also beispielsweise auf einem Server oder einer Cloud ausgeführt werden kann.

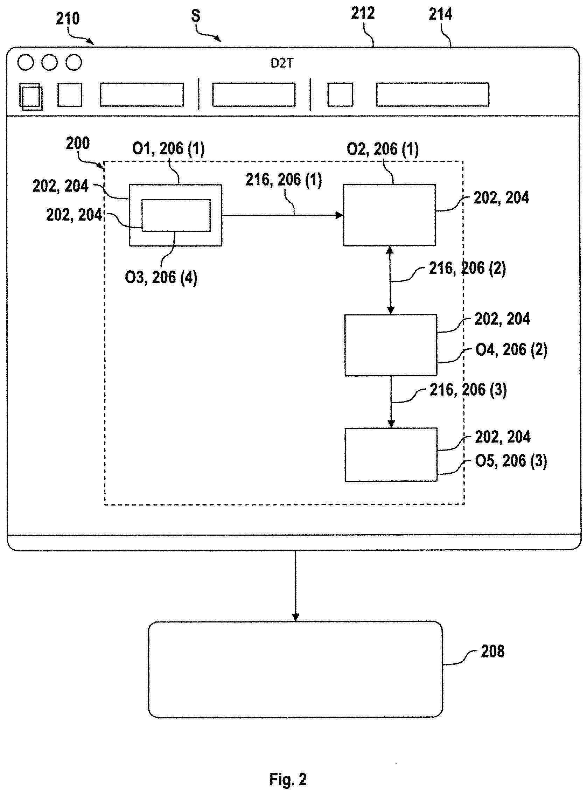

Das Verfahren S umfasst (auch mit Verweis auf die Fig. 2 bis 4) mindestens die folgenden Schritte:
In einem Schritt S1 erfolgt ein Bereitstellen von, insbesondere graphischen, Eingabedaten 200, 300, 400, die Kennzeichnungsinformationen 202, 302, 302 zu Objekten 204, 304, 404, die in den Eingabedaten 200, 300, 400 umfasst sind, aufweisen. Die Kennzeichnungsinformationen 202, 302, 302 weisen beispielsweise eine jeweilige Objektbeschreibung- und/oder Klassifizierung und/oder eine Interaktionsinformation zwischen Objekten 204, 304, 404 auf.

In einem Schritt S2 erfolgt ein Bereitstellen einer Gewichtungsinformation 206, 306, 406 zu mindestens einem der Objekte 204, 304, 404 und/oder zu mindestens einer der Kennzeichnungsinformationen 202, 302, 302.

In einem Schritt S3 erfolgt ein Verarbeiten der Eingabedaten 200, 300, 400 und/oder der Objekte 204, 304, 404 und/oder der Kennzeichnungsinformationen 202, 302, 302 und der mindestens einen Gewichtungsinformation 206, 306, 406 durch mindestens ein maschinelles Lernmodell zum Generieren der auf Basis der Gewichtungsinformation 206, 306, 406 gewichteten Textausgabe und/oder Sprachausgabe 208, 308, 408.

In einem Schritt S4 weist das Verfahren das Generieren der auf Basis der Gewichtungsinformation 206, 306, 406 gewichteten Textausgabe und/oder Sprachausgabe 208, 308, 408 auf.

Fig. 2 zeigt eine schematische Ansicht eines Anwendungsfalls des vorliegenden Verfahrens in einer seiner Ausführungen. Dabei wird das Verfahren im Rahmen eines Softwaretools 210 ausgeführt, das schematisch in Fig. 2 visualisiert ist. Das Softwaretool 210 ist dadurch visualisiert, dass eine schematische Ansicht einer Benutzeroberfläche 212 gezeigt ist. Das Softwaretool 210 ist als Programm zur graphischen Datenverarbeitung 214 ausgebildet und kann durch einen Nutzer dazu verwendet werden, Bilddaten und/oder von Vektordaten zu erstellen, die als die Eingabedaten 200 für das vorliegende Verfahren dienen können. Das vorliegende Softwaretool 210 kann grundsätzlich als ein Plug-In-Softwaretool bereitgestellt sein, und beispielsweise mit einem Computer-Aided-Design-(CAD) Software verbunden werden. Auch eine Integration in eine CAM (Computer-Aided Manufacturing) Software und/oder eine CAE (Computer-Aided Engineering) Software ist denkbar. Ebenfalls kann das vorliegende Softwaretool 210 als Plug-In-Lösung für ein Programm zur graphischen Datenverarbeitung 214, wie zum Beispiel PowerPoint^{®} vom Hersteller Microsoft^{®} bereitgestellt sein.

Dabei kann der Nutzer mittels des Softwaretools 210 beispielsweise eine technische Skizze und/oder Graphik und/oder Zeichnung und/oder ein Flussdiagramm oder dergleichen erzeugen, wie dies in Fig. 2 schematisch gezeigt ist. Die derart erzeugten Bilddaten und/oder Vektordaten umfassen mehrere Kennzeichnungsinformationen 202 zu Objekten 204. Die Kennzeichnungsinformationen 202 können eine jeweilige Objektbeschreibung- und/oder Klassifizierung O1, O2, O3, O4, O5 und/oder eine Interaktionsinformation 216 zwischen Objekten 204 aufweisen. Die jeweilige Objektbeschreibung O1, O2, O3, O4, O5 kann mindestens eine Objektfunktionalität und/oder einen Funktionsumfang aufweisen. Die Objektklassifizierung kann eine Objektklasse und/oder einen Objekttype und/oder eine Objektgruppe aufweisen. Die jeweilige Interaktionsinformation 216 kann eine Information zu mindestens einem Wirkzusammenhang und/oder einer Wirkverbindung zwischen mindestens zwei Objekten 204 aufweisen. Vorliegend können die Objekte 204, die Kennzeichnungsinformationen 202 und die Interaktionsinformationen 216 jeweils durch den Nutzer über entsprechende Nutzereingabe in das Softwaretool 210 erzeugt werden. In anderen Ausführungen können die Kennzeichnungsinformationen 202 auch zumindest teilweise automatisch, beispielsweise durch Anlagen eines Objektes 204 erzeugt, beispielsweise aus einer Datenbank des Softwaretool 210 geladen werden. Auch können Objekten 202, beispielsweise aufgrund ihrer Form und/oder Funktion und/oder ihres Graphischen Erscheinungsbildes bereits bestimmte Kennzeichnungsinformationen 202 zugeordnet sein. So kann es möglich sein, dass ein Pfeil als Interaktionsinformation 216 bereits eine Aussage über eine Art der Interaktion zwischen den Objekten 204 aufweist, beispielsweise aufgrund eines Anlegungsursprungs und einer Terminierung. Ähnliches gilt für beliebige Objekte 204, deren Kennzeichnungsinformationen 202 zumindest teilweise, beispielsweise in einer Datenbank, hinterlegt oder abrufbar sein können. dem jeweiligen Objekt 204 und der jeweiligen Kennzeichnungsinformation 202 ist vorzugsweise jeweils eine Gewichtungsinformation 206 zugeordnet. Die Zuordnung kann beim Anlegen des Objektes 204 bzw. der Kennzeichnungsinformationen 202 zunächst per Default auf einen bestimmten Wert gesetzt sein, um dann vom Nutzer spezifisch veränderbar zu sein. Alternativ kann die Gewichtungsinformation 206 auch mitsamt einem Objekt 204 und/oder einer Kennzeichnungsinformation 202 hinterlegt sein. Vorliegend sind die Gewichtungsinformationen 206 durch numerische Werte bestimmt. Der Wert 1 beschreit die höchste Gewichtung. Der Wert 2 beschreibt eine geringere Gewichtung. Der Wert 3 beschreibt eine gegenüber dem Wert 2 geringere Gewichtung. Der Wert 4 beschreibt eine gegenüber dem Wert 3 geringere Gewichtung. Die jeweilige Gewichtungsinformationen 206 ist in Fig. 2 jeweils in Klammer hinter das jeweilige Bezugszeichen 206 gesetzt.

Das Softwaretool 210 ist auf Basis der Eingabedaten 200 nun dazu ausgebildet eine Text- und/oder Sprachausgabe 208 zu erzeugen. Dabei werden die durch den Nutzer über das Softwaretool 210 erstellten Eingabedaten 200 und/oder die angelegten Objekte 204 und/oder die erstellten und/oder angelegten Kennzeichnungsinformationen 202 sowie die jeweiligen Gewichtungsinformationen 206 durch mindestens ein maschinelles Lernmodell, beispielsweise ein LLM, derart verarbeitet, dass auf Basis der mindestens einen Gewichtungsinformation 206 sowie vorzugsweise auf Basis der zugehörigen weiteren Informationen aus den Eingabedaten 200 mindestens eine gewichtete Textausgabe und/oder Sprachausgabe 208 generiert wird.

Beispielhaft wird zu den Eingabedaten 200 aus Fig. 2 die folgende Textausgabe 208 generiert, wobei durch das Large Language Modell (LLM) zunächst nur Informationen verarbeitet werden, denen die Gewichtung (1) zugewiesen ist:
"Objekt O1 ist der Objektklasse X zugeordnet und dazu ausgebildet, Informationen an Objekt O2 zu senden, wobei Objekt O2 dazu ausgebildet ist, die Informationen zu verarbeiten."

In einer beispielhaften weiteren Stufe, die durch die Gewichtung (2) bestimmt ist, kann dann beispielhaft die Textausgabe 208 erweitert werden oder eine neue Textausgabe 208 erzeugt werden, beispielhaft:
"Objekt O2 ist mit Objekt O4 in einem bidirektionalen Informationsaustausch, wobei das Objekt O4 dazu ausgebildet ist, die Informationen von O2 weiterzuverarbeiten. Objektklasse X zugeordnet und dazu ausgebildet, Informationen an Objekt O2 zu senden, wobei Objekt O2 dazu ausgebildet ist, die Informationen zu verarbeiten."

In einer beispielhaften weiteren Stufe, die durch die Gewichtung (3) bestimmt ist, kann dann beispielhaft die Textausgabe 208 erweitert werden oder eine neue Textausgabe 208 erzeugt werden, beispielhaft:
"Objekt O4 ist dazu eingerichtet, die weiterverarbeiteten Informationen an Objekt O5 zu senden, wobei Objekt O5 dazu ausgebildet ist, die Informationen O5 auszugeben."

In einer beispielhaften weiteren Stufe, die durch die Gewichtung (4) bestimmt ist, kann dann beispielhaft die Textausgabe 208 erweitert werden oder eine neue Textausgabe 208 erzeugt werden, beispielhaft:
"Objekt O1 umfasst Objekt O3, wobei Objekt O3 dazu eingerichtet ist, die Informationen von O1 zu speichern."

Auf Basis solcher Gewichtungsinformationen ist es somit möglich, spezifisch gewichtete Textausgaben 208 zu erzeugen. Auch ähnliche Weise, wie zuvor beschrieben, kann es somit auch möglich sein, eine Zusammenbauanleitung beispielsweise auf Basis einer technischen Zeichnung, insbesondere einer Explosionszeichnung, automatisch zu erzeugen. Die Text- und/oder Sprachausgabe kann vorzugsweise auch mit einer Augmented Reality (AR) Anwendung, beispielsweise einen AR-Brille und/oder AR-Linse, kombinierbar sein, um so beispielsweise einen Nutzer, insbesondere schrittweise, mittels der durch die Text- und/oder Sprachausgabe bereitgestellten auditiven und/oder textuellen Begleitung bei einem Zusammenbau eines Produktes zu begleiten und zu unterstützen. Allgemein kann das Verfahren zum Generieren der gewichtete Textausgabe 208 auch zum Erzeugen einer technischen Beschreibung eines technischen Gegenstandes und/oder Verfahrens auf Basis einer technischen Zeichnung, einer Skizze, einer Graphik und/oder eines Flussdiagramms, die als Eingabedaten 200 dient/dienen.

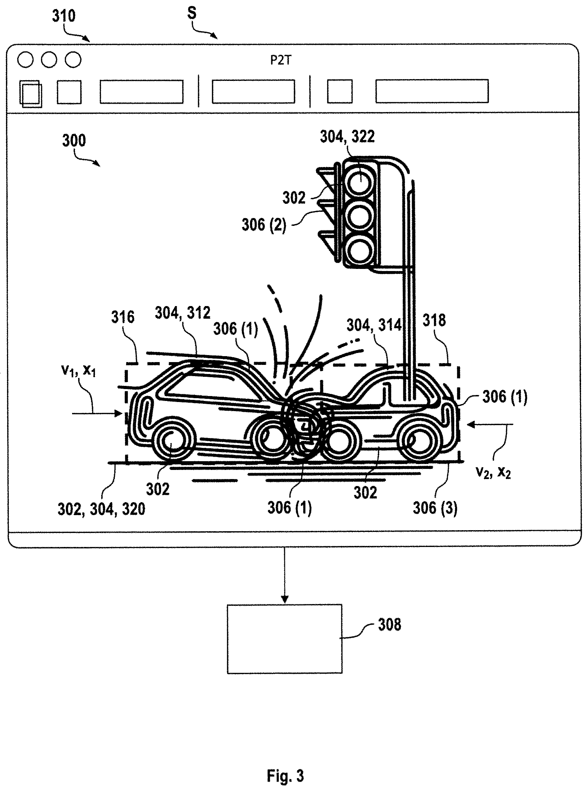

Fig. 3 zeigt eine schematische Ansicht eines Anwendungsfalls des vorliegenden Verfahrens in einer seiner Ausführungen. Dabei können über ein entsprechend ausgebildetes Softwaretool 310 Bild- und/oder Videodaten als die Eingabedaten 300 verarbeitetet werden. Beispielhaft ist in den Bild- und/oder Videodaten eine Aufnahme einer Straßenkreuzung dargestellt, an der zwei Fahrzeuge 312, 314 miteinander aufgrund einer Missachtung einer Verkehrsregel durch mindestens eines der Fahrzeuge kollidiert sind. Durch das mindestens eine maschinelle Lernmodell, das vorliegend beispielsweise ein Klassifikationsmodell und/oder ein semantisches Segmentierungsmodell aufweisen kann, können die Fahrzeuge 312, 314 bzw. die Objekte 304 beispielsweise automatisch als solche erkannt und ggf. durch das Erzeugen von Bounding-Boxen 316, 318 entsprechend segmentiert werden (beispielsweise durch ein vortrainiertes CNN, vorzugsweise in Kombination mit einem Decoder), wobei insbesondere auch Geschwindigkeits- und/oder Richtungsinformationen als die Kennzeichnungsinformationen 302 aus den (insbesondere aufeinanderfolgenden Bilddaten) oder Videodaten, insbesondere durch Vectorflow-Analyse ermittelbar sind. Durch das mindestens eine maschinelle Lernmodell können auch weitere Objekte 304 und/oder zugehörige Kennzeichnungsinformationen 302 aus den Bild- und/oder Videodaten, beispielsweise eine Straße 320 (mit Kennzeichnungsinformationen, wie Oberflächenbeschaffenheit, Witterungsverhältnis, etc.) und/oder eine Ampel 322 (mit Kennzeichnungsinformationen, wie Schaltstellung, Schaltzeitpunkt, etc.) extrahiert werden. Auch ähnlich Weise können auch Informationen aus Verkehrsbeschilderungen extrahiert werden, beispielsweise eine Fahrtrichtungsangabe oder ein Umleitungssymbol etc. Die Extraktion der Objekte 304 und deren Kennzeichnungsinformationen 302 kann alternativ oder unterstützend auch durch einen Nutzer mittels des Softwaretools 310 durchgeführt werden. Dies kann vorteilhaft sein, wenn beispielsweise Domänenwissen und/oder Expertenwissen in die Kennzeichnung miteinfließen soll. Der Nutzer kann vorzugsweise Gewichtungsinformationen 306 für die Objekte 304 und/oder die jeweiligen Kennzeichnungsinformationen 302 festlegen. Vorliegend wurden vom Nutzer die Gewichtungsinformationen 306 beispielhaft festgelegt als: Fahrzeug 312 (Objekt 304) mit Geschwindigkeit v₁ und Richtung x₁ (Kennzeichnungsinformationen 302) hat Gewichtung (1). Fahrzeug 314 (Objekt 304) mit Geschwindigkeit v₂ und Richtung x₂ (Kennzeichnungsinformation 302) hat Gewichtung (1). Eine weitere Gewichtungsinformation 306 kann mit (1) für einen Überschneidungsbereich der Bounding-Boxen 316, 318 angegeben werden um derart einen Ort der Kollision (beispielsweise im Überlappungsbereich der Bounding-Boxen 316, 318) zu ermitteln. Ampel 322 (Objekt 304) mit Ampelschaltstellung und Schaltzeitpunkt (Kennzeichnungsinformationen 302) hat Gewichtung (2). Straße 320 (Objekt 304) mit Oberflächenbeschaffenheit und Witterungsverhältnis-Angabe (Kennzeichnungsinformation 302) hat Gewichtung (3).

Auf Basis dieser Informationen in den Eingabedaten 300 kann durch die Gewichtungsinformationen 306 nun automatische eine Textausgabe 308 insbesondere in Form eines Unfallberichtes erstellt werden.

Beispielhaft kann eine solche Textausgabe 308 lauten:
"Fahrzeug 1 war mit einer Geschwindigkeit von v1 in Richtung x₁ unterwegs als es mit Fahrzeug 2, das mit einer Geschwindigkeit von v₂ in Richtung x₂ unterwegs war, an dem Ort X kollidierte.
Zum Zeitpunkt der Kollision war die Ampel für das Fahrzeug 2 auf Rot geschaltet, wobei der Schaltzeitpunkt X Sekunden vor der Kollision war.
Zum Zeitpunkt des Unfalls war die Straße trocken und der Belag in Takt, so dass daraus keine Fahrbahnoberfläche spezifischen Einschränkungen für Fahrzeug 2 ermittelbar sind."

Im Falle einer solchen Erzeugung eines Unfallberichtes aus Bild- und/oder Videodaten kann es auch bevorzugt sein, wenn das LLM länderspezifisch mit Rechtstexten und/oder juristischen Entscheidungen nachtrainiert wird, um bei der Erstellung der Textausgabe 308 derart spezifisches Wissen miteinzubeziehen. Dadurch können die Textausgabe 308 beispielsweise noch durch einen Zusatz ergänzt werden:
"Relevante mildernde objektive Umstände sind nicht ersichtlich."

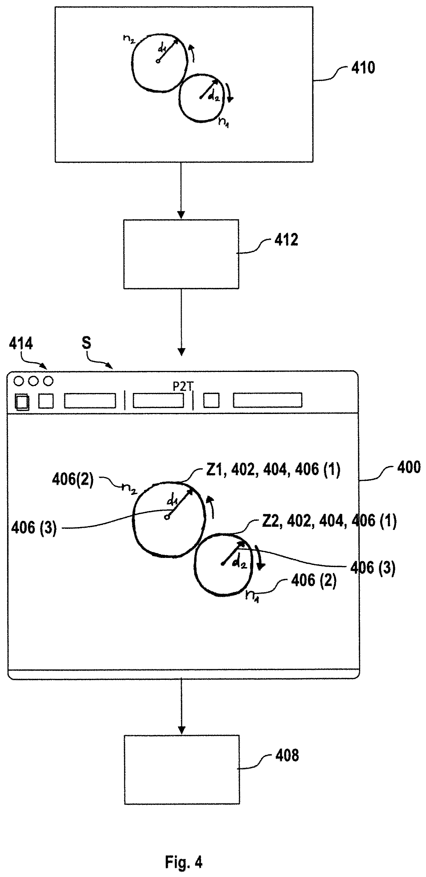

Fig. 4 zeigt eine schematische Ansicht eines Anwendungsfalls des vorliegenden Verfahrens in einer seiner Ausführungen. Dabei kann ein Nutzer die Eingabedaten 400 zunächst in Form von Rohdaten 410, beispielsweise als Handskizze auf Papier, bereitstellen. Die Digitalisierung der Rohdaten 410 erfolgt vorzugsweise mittels einer Scan-Vorrichtung 412. Die in den Rohdaten 410 umfassten Kennzeichnungsinformationen 402 sowie die darin umfassten Objekte 404 können vorzugsweise im Anschluss an den Scan-Vorgang mittels eines maschinellen Lernmodells, insbesondere eines Klassifikationsmodells und/oder eines semantischen Segmentierungsmodell aus den nunmehr digitalen Eingabedaten 400 extrahiert werden. Auch ist es möglich, die in den durch den Scan digitalisierten Eingabedaten 400 umfassten Informationen (Objekte, Kennzeichnungsinformationen und/oder sonstige Metainformationen) durch mindestens einen Bild-Muster-Erkennungs-Algorithmus und/oder durch einen Vektorraumabgleich und/oder durch mehrere voneinander unterschiedliche Bild-Muster-Erkennungs-Algorithmen zu extrahieren. In einem entsprechenden Softwaretool 414, bei dem es sich um das in Fig. 2 schematisch dargestellte Softwaretool 210 handeln kann, können die derart digitalisierten und vorverarbeiteten Eingabedaten 400 dann vorzugsweise nochmals durch einen Nutzer kuratiert und/oder ergänzt werden. Dabei können beispielsweise die Gewichtungsinformationen 406 für die Objekte 404 und/oder die Kennzeichnungsinformationen 402 angelegt werden. Die Gewichtungsinformationen 406 können jedoch grundsätzlich auch bereits in den Rohdaten 410 umfasst sein, beispielsweise als numerische Werte oder durch Farbgebung oder auf sonstige Weise. In dem gezeigten Beispiel sind schematische zwei Zahnräder als die Objekte 404 gezeigt. In den Rohdaten 410 sind neben den Objekten Z₁, Z₂, 404 ferner weitere Kennzeichnungsinformationen 402 als Mischung aus numerischen Daten und Textdaten umfasst, die beispielsweise durch einen Bild-Muster-Erkennungs-Algorithmus (z.B. OCR oder ähnliches) entsprechend in maschinenlesbare Form überführt wurden, um so von dem Softwaretool 414 (weiter-) verarbeitbar zu sein. Für das Objekt Z₁ wurden in den Rohdaten 410 die Kennzeichnungsinformationen 404, n₂, d₁ sowie eine Drehrichtung (die einer Interaktionsinformation entspricht) angegeben. Für das Objekt Z₂ wurden in den Rohdaten 410 die Kennzeichnungsinformationen 404, n₁, d₂ sowie eine Drehrichtung (die einer Interaktionsinformation entspricht) angegeben. Der Nutzer kann nun zu den Objekten und Kennzeichnungsinformationen 404 jeweils eine Gewichtungsinformation 406 angeben. Der Wert 1 beschreit die höchste Gewichtung. Der Wert 2 beschreibt eine geringere Gewichtung. Der Wert 3 beschreibt eine gegenüber dem Wert 2 geringere Gewichtung.

Auf Basis dieser Informationen kann nun mindestens ein gewichteter Textausgabe 408 erzeugt werden.

Beispielhaft wird zu den Eingabedaten 400 aus Fig. 4 die folgende Textausgabe 408 generiert, wobei durch das LLM zunächst nur Informationen verarbeitet werden, denen die Gewichtung (1) zugewiesen ist:
"Zahnrad Z₁ greift in Zahnrad Z₂ ein."

In einer beispielhaften weiteren Stufe, die durch die Gewichtung (2) bestimmt ist, kann dann beispielhaft die Textausgabe 408 erweitert werden oder eine neue Textausgabe 408 erzeugt werden, beispielhaft:
"Zahnrad Z₁ hat eine Zahnanzahl n₂. Zahnrad Z₂ hat eine Zahnanzahl n₁. Die Zahnanzahl n₁ ist kleiner als die Zahnanzahl n₂."

In einer beispielhaften weiteren Stufe, die durch die Gewichtung (3) bestimmt ist, kann dann beispielhaft die Textausgabe 408 erweitert werden oder eine neue Textausgabe 408 erzeugt werden, beispielhaft:
"Das Zahnrad Z₁ hat den Durchmesser d₁. Das Zahnrad Z₂ hat den Durchmesser d₂. Der Durchmesser d₂ ist kleiner als der Durchmesser d₁."

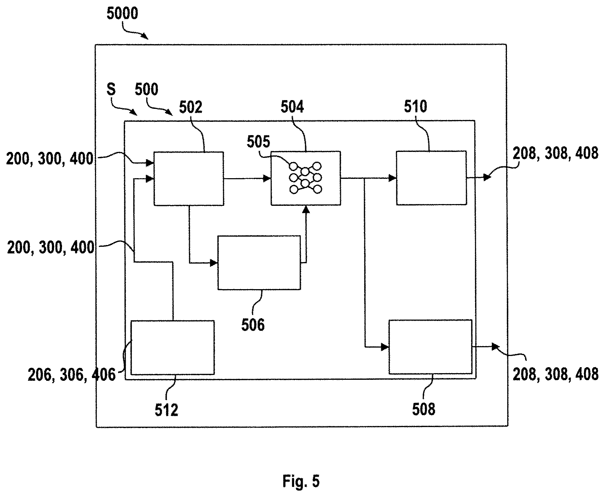

Fig. 5 zeigt eine schematische Ansicht einer beispielhaften Vorrichtung 500. Das Verfahren S kann in einem beliebigen Aspekt durch die Vorrichtung 500 ausgeführt werden.

Die Vorrichtung 500 kann mehrere Komponenten, beispielsweise eine oder mehrere Bereitstellungseinrichtungen 502 und/oder mindestens eine Auswerte- und Recheneinrichtung 504 umfassen. Es versteht sich, dass die Bereitstellungseinrichtung 502 gemeinsam mit der Auswerte- und Recheneinrichtung 504 ausgebildet sein kann, oder von dieser unterschiedlich sein kann.

Die Vorrichtung 500 kann auch Teil eines Systems 5000 sein.

Die Vorrichtung 500 kann ferner eine Speichereinrichtung 506 und/oder eine Ausgabeeinrichtung 508 und/oder eine Anzeigeeinrichtung 510 und/oder eine Eingabeeinrichtung 512 umfassen.

Die Eingabeeinrichtung 512 kann die Eingabedaten 200, 300, 400 der Bereitstellungseinrichtung 502 übergeben. Die Eingabeeinrichtung 512 kann dazu verwendet werden, die mindestens eine Gewichtungsinformation zu den Eingabedaten bereitzustellen.

Die Bereitstellungseinrichtung 502 kann auch Eingabeeinrichtung 512 umfassen oder umgekehrt. Die Bereitstellungseinrichtung 502 kann auch die Eingabedaten 200, 300, 400 bereitstellen. Die Bereitstellungseinrichtung 502 kann die Eingabedaten 200, 300, 400 der Auswerte- und Recheneinrichtung 504 bereitstellen. Die Bereitstellungseinrichtung 502 kann die Eingabedaten 200, 300, 400 auch in der Speichereinrichtung 506 (zwischen-) speichern.

Die Speichereinrichtung 506 kann die Eingabedaten 200, 300, 400 der Auswerte- und Recheneinrichtung 504 bereitstellen.

Die Auswerte- und Recheneinrichtung 504 kann dazu eingerichtet sein, die Eingabedaten 200, 300, 400 und/oder der Objekte 204, 304, 404 und/oder der Kennzeichnungsinformationen 202, 302, 302 und der mindestens einen Gewichtungsinformation 206, 306, 406 durch das mindestens eine maschinelle Lernmodell 505 zu verarbeiten und auf Basis der Gewichtungsinformation 206, 306, 406 die mindestens eine gewichtete Textausgabe und/oder Sprachausgabe 208, 308, 408 zu generieren.

Die Textausgabe und/oder Sprachausgabe 208, 308, 408 kann über die Ausgabeeinrichtung 508 und/oder die Anzeigeeinrichtung 510 in visueller und/oder auditiver und/oder physischer Form (beispielsweise als physischer Ausdruck) ausgegeben werden.

### Bezugszeichenliste

- 200: Eingabedaten
- 202: Kennzeichnungsinformationen
- 204: Objekte
- 206: Gewichtungsinformationen
- 208: Textausgabe und/oder Sprachausgabe
- 210: Softwaretool
- 212: Benutzeroberfläche
- 214: Programm zur graphischen Datenverarbeitung
- 216: Interaktionsinformation
- 300: Eingabedaten
- 302: Kennzeichnungsinformationen
- 304: Objekte
- 306: Gewichtungsinformationen
- 308: Textausgabe und/oder Sprachausgabe
- 310: Softwaretool
- 312: Fahrzeug
- 314: Fahrzeug
- 316: Bounding-Box
- 318: Bounding-Box
- 320: Straße
- 322: Ampel
- 400: Eingabedaten
- 402: Kennzeichnungsinformationen
- 404: Objekte
- 406: Gewichtungsinformationen
- 408: Textausgabe und/oder Sprachausgabe
- 410: Rohdaten
- 412: Scan-Vorrichtung
- 414: Softwaretool
- 500: Vorrichtung
- 502: Bereitstellungseinrichtungen
- 504: Recheneinrichtung
- 505: maschinelles Lernmodell
- 506: Speichereinrichtung
- 508: Ausgabeeinrichtung
- 510: Anzeigeeinrichtung
- 512: Eingabeeinrichtung

- d₁: Durchmesser
- d₂: Durchmesser
- n₁: Zahnzahl
- n₂: Zahnzahl
- O1: Objektbeschreibung- und/oder Klassifizierung
- O2: Objektbeschreibung- und/oder Klassifizierung
- O3: Objektbeschreibung- und/oder Klassifizierung
- O4: Objektbeschreibung- und/oder Klassifizierung
- O5: Objektbeschreibung- und/oder Klassifizierung
- S: Verfahren
- S1: Schritt "Bereitstellen"
- S2: Schritt "Bereitstellen"
- S3: Schritt "Verarbeiten"
- S4: Schritt "Generieren"
- v₁: Geschwindigkeit
- v₂: Geschwindigkeit
- x₁: Richtung
- x₂: Richtung
- Z₁: Objekt
- Z₂: Objekt

## Patentansprüche

1. Verfahren zum automatischen Generieren einer gewichteten Textausgabe und/oder Sprachausgabe (208, 308, 408) auf Basis von Eingabedaten (200, 300, 400); das Verfahren aufweisend:
- Bereitstellen (S1) von, insbesondere graphischen, Eingabedaten (200, 300, 400), die Kennzeichnungsinformationen (202, 302, 402) zu Objekten (204, 304, 404), die in den Eingabedaten (200, 300, 400) umfasst sind, aufweisen; wobei die Kennzeichnungsinformationen (202, 302, 402) eine jeweilige Objektbeschreibung- und/oder Klassifizierung und/oder eine Interaktionsinformation zwischen Objekten (204, 304, 404) aufweist;
- Bereitstellen (S2) mindestens einer Gewichtungsinformation (206, 306, 406) zu mindestens einem der Objekte und/oder zu mindestens einer der Kennzeichnungsinformationen (202, 302, 402); und
- Verarbeiten (S3) der Eingabedaten (200, 300, 400) und/oder der Objekte und/oder der Kennzeichnungsinformationen (202, 302, 402) und der mindestens einen Gewichtungsinformation (206, 306, 406) durch mindestens ein maschinelles Lernmodell zum Generieren (S4) der auf Basis der mindestens einen Gewichtungsinformation (206, 306, 406) gewichteten Textausgabe und/oder Sprachausgabe (208, 308, 408).

2. Verfahren nach Anspruch 1, wobei das Bereitstellen der Eingabedaten (200, 300, 400) aufweist: Bereitstellen von Bilddaten durch einen Scan einer, insbesondere technischen, Skizze und/oder Graphik und/oder Zeichnung eines Nutzers; oder
Bereitstellen von Bilddaten und/oder von Vektordaten, insbesondere einer technischen Skizze und/oder Graphik und/oder Zeichnung, die durch einen Nutzer mittels eines Programms zur graphischen Datenverarbeitung erstellbar ist/sind; oder
Bereitstellen von Bild- und/oder Videodaten auf Basis einer Kamera- oder Videoaufnahme, die mittels eines optischen Sensors erfolgt.

3. Verfahren nach Anspruch 1 oder 2, wobei die Kennzeichnungsinformationen (202, 302, 402) zu den Objekten (204, 304, 404) bereitgestellt sind:
durch mindestens eine graphische Objekteigenschaft, insbesondere eine Größe und/oder Form und/oder Art und/oder Erscheinung, und/oder durch eine textuelle Objektkennzeichnung und/oder durch Metainformationen; und
wobei die Kennzeichnungsinformationen (202, 302, 402) zumindest teilweise automatisch, insbesondere durch einen Abgleich eines der in den Eingabedaten (200, 300, 400) umfassten Objekte mit vorbekannten Objekten (204, 304, 404) mittels des mindestens einen maschinellen Lernmodells, erzeugbar und/oder verarbeitbar sind; und/oder
wobei die Kennzeichnungsinformationen (202, 302, 402) zumindest teilweise durch ein manuelles Kennzeichnen erzeugbar sind.

4. Verfahren nach einem der vorstehenden Ansprüche, wobei die mindestens eine Gewichtungs-information als kontinuierlicher Skalar in einem zusätzlichen Transparenz- bzw. Alpha-Kanal (RGBA-Format) der Eingabedaten hinterlegt wird, wobei jeder Pixelwert des Alpha-Kanals einen Gewichtungswert zwischen 0 und 1 repräsentiert und das mindestens eine maschinelle Lernmodell diesen Kanal unabhängig von Objekt-Erkennungswahrscheinlichkeiten auswertet, wobei vorzugsweise der Alpha-Kanal dynamisch während einer Nutzer-Interaktion über ein Eingabegerät modifizierbar ist und Änderungen an der Gewichtung in die Text- bzw. Sprachausgabe rückgekoppelt werden.

5. Verfahren nach einem der vorstehenden Ansprüche, wobei für mehrere Objekte und/oder für mehrere Kennzeichnungsinformationen (202, 302, 402) jeweils eine Gewichtungsinformation (206, 306, 406) bereitgestellt wird, und
wobei das mindestens eine maschinelle Lernmodell auf Basis der jeweiligen Gewichtungsinformation (206, 306, 406) eine Rangfolge und/oder Abfolge einer, insbesondere textuellen und/oder auditiven, Beschreibung des jeweiligen Objekts und/oder der jeweiligen Kennzeichnungsinformation in der generierten, gewichteten Textausgabe und/oder Sprachausgabe (208, 308, 408) erzeugt.

6. Verfahren nach Anspruch 5, wobei das mindestens eine maschinelle Lernmodell auf Basis der jeweiligen Gewichtungsinformation (206, 306, 406) , insbesondere entsprechend einer zumindest einstufigen Rangfolge, diejenigen Objekte und/oder Kennzeichnungsinformationen (202, 302, 402) in der gewichteten Textausgabe beschreibt, die mindestens ein vorbestimmtes Gewichtungskriterium erfüllen.

7. Verfahren nach einem der vorstehenden Ansprüche, wobei die Gewichtungsinformation als Parameter λ direkt in die Loss-Funktion des großen Sprachmodells eingeht, wobei ein höherer Gewichtungswert eine stärkere Regularisierung des Token-Wahrscheinlichkeitsraums in Richtung der korrespondierenden Objekt- oder Kennzeichnungsinformation bewirkt.

8. Verfahren nach einem der vorstehenden Ansprüche, wobei das mindestens eine maschinelle Lernmodell eine großes Sprachmodell und/oder ein Convolutional Neural Netzwork und/oder ein Transformer-Modell aufweist.

9. Verfahren nach einem der vorstehenden Ansprüche, wobei das Verarbeiten der Eingabedaten (200, 300, 400) und/oder der darin umfassten Objekte und/oder der Kennzeichnungsinformationen (202, 302, 402) und der mindestens einen Gewichtungsinformation (206, 306, 406) durch das mindestens eine maschinelle Lernmodell aufweist:
Verarbeiten von graphischen Informationen der Eingabedaten (200, 300, 400) und/oder der darin umfassten Objekte und/oder der Kennzeichnungsinformationen (202, 302, 402) und/oder der mindestens einen Gewichtungsinformation (206, 306, 406) durch Klassifizieren und/oder Segmentieren durch das mindestens eine maschinelle Lernmodell und/oder durch Erfassen durch mindestens einen Bild-Muster-Erkennungs-Algorithmus und/oder durch einen Vektorraumabgleich und/oder durch mehrere voneinander unterschiedliche Bild-Muster-Erkennungs-Algorithmen; und/oder
Verarbeiten von textuellen Informationen der Kennzeichnungsinformationen (202, 302, 402) und/oder der mindestens einen Gewichtungsinformation (206, 306, 406) durch das mindestens eine maschinelle Lernmodell.

10. Verfahren nach einem der vorstehenden Ansprüche, wobei die mindestens eine Gewichtungsinformation (206, 306, 406) durch eine, insbesondere manuelle, Nutzereingabe bereitgestellt wird, oder wobei die mindestens eine Gewichtungsinformation (206, 306, 406) zumindest teilweise automatisch in Abhängigkeit mindestens eines Gewichtungskriteriums erzeugt wird.

11. Verfahren nach einem der vorstehenden Ansprüche, wobei das große Sprachmodell in einem Reinforcement-Learning-from-Human-Feedback-Schritt nachtrainiert wird, wobei die Gewichtungsinformation Teil einer Reward-Funktion ist und Nutzerfeedback mit höher gewichteten Objekten überproportional in das Fine-Tuning eingeht.

12. Computerprogrammprodukt, umfassend Befehle, die bei der Ausführung des Programms durch einen Computer diesen veranlassen, die Schritte des Verfahrens nach einem der Ansprüche 1 bis 11 auszuführen.

13. Computerlesbarer Datenträger, auf dem das Computerprogrammprodukt nach Anspruch 12 gespeichert ist.

14. Vorrichtung (500) zum automatischen Generieren einer gewichteten Textausgabe und/oder Sprachausgabe (208, 308, 408) auf Basis von Eingabedaten (200, 300, 400), wobei die Vorrichtung (500) eine Auswerte- und Recheneinrichtung (504) aufweist, die dazu ausgebildet ist, die folgenden Schritte auszuführen:
- Bereitstellen von, insbesondere graphischen, Eingabedaten (200, 300, 400), die Kennzeichnungsinformationen (202, 302, 402) zu Objekten (204, 304, 404), die in den Eingabedaten (200, 300, 400) umfasst sind, aufweisen; wobei die Kennzeichnungsinformationen (202, 302, 402) eine jeweilige Objektbeschreibung- und/oder Klassifizierung und/oder eine Interaktionsinformation zwischen Objekten (204, 304, 404) aufweist;
- Bereitstellen mindestens einer Gewichtungsinformation (206, 306, 406) zu mindestens einem der Objekte und/oder zu mindestens einer der Kennzeichnungsinformationen (202, 302, 402); und
- Verarbeiten der Eingabedaten (200, 300, 400) und/oder der Objekte und/oder der Kennzeichnungsinformationen (202, 302, 402) und der mindestens einen Gewichtungsinformation (206, 306, 406) durch mindestens ein maschinelles Lernmodell (505) zum Generieren der auf Basis der mindestens einen Gewichtungsinformation (206, 306, 406) gewichteten Textausgabe und/oder Sprachausgabe (208, 308, 408).

15. Vorrichtung nach Anspruch 14, wobei die Auswerte- und Recheneinrichtung einen Hardware-beschleunigten Attention-Co-Prozessor aufweist, der den Alpha-Kanal der Eingabedaten als Zusatz-Attention-Map in den Self-Attention-Layern des Transformermodells einspeist, insbesondere getrennt von visuellen Key- und Value-Tensoren.
